(19) Europäisches Patentamt
European Patent Office
Office européen des brevets

(11) **EP 4 174 725 A1**

(12) **EUROPEAN PATENT APPLICATION**

(43) Date of publication:
**03.05.2023 Bulletin 2023/18**

(21) Application number: **22184891.4**

(22) Date of filing: **14.07.2022**

(51) International Patent Classification (IPC):
*G06N 3/08* (2023.01)          *G06N 3/063* (2023.01)
*G06F 9/50* (2006.01)          *G06N 3/04* (2023.01)

(52) Cooperative Patent Classification (CPC):
**G06N 3/084; G06N 3/045; G06N 3/063**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.10.2021 US 202117510959**

(71) Applicant: **INTEL Corporation**
**Santa Clara, CA 95054 (US)**

(72) Inventor: **Mostafa, Hesham**
**San Diego, 92122 (US)**

(74) Representative: **Goddar, Heinz J.**
**Boehmert & Boehmert**
**Anwaltspartnerschaft mbB**
**Pettenkoferstrasse 22**
**80336 München (DE)**

(54) **MEMORY-EFFICIENT DISTRIBUTED NEURAL NETWORK TRAINING USING REMATERIALIZATION**

(57)    Various embodiments provide apparatuses, systems, and methods related to a first worker of a distributed neural network (NN), The first worker may execute a forward training pass of a first node of a distributed NN, wherein execution of the forward training pass includes generation of a first computational graph (CG) that is based on inputs related to a second node that is processed by a second worker of the distributed NN. The first worker may also delete, subsequent to the forward training pass of the first node, the CG. The first worker may also execute, a backward pass of the first node, wherein execution of the backward pass includes regeneration of at least a portion of the first CG. Other embodiments may be described and claimed.

Figure 6

## Description

### Field

Embodiments of the present invention relate generally to the technical field of artificial intelligence (AI), machine learning (ML), and neural networks (NNs), and more particularly to techniques for memory-efficient training in such neural networks.

### Background

Large deep NNs may be trained in a distributed setting where different workers process different portions of the data to produce different portions of the output. However, in some situations the output produced by one worker may rely on data located in another worker, which may result in memory inefficiencies when duplicating this data between workers.

### Brief Description of the Drawings

Embodiments will be readily understood by the following detailed description in conjunction with the accompanying drawings. To facilitate this description, like reference numerals designate like structural elements. Embodiments are illustrated by way of example and not by way of limitation in the Figures of the accompanying drawings.

Figure 1 illustrates an example of distributed training in a NNs, in accordance with various embodiments.
Figures 2a and 2b illustrate an example of a computational graph of distributed training of a network, in accordance with various embodiments.
Figure 3 illustrates an example of a backwards pass during training in a distributed NN, in accordance with various embodiments.
Figure 4 illustrates an example of the generation and deletion of computational graphs (CGs) during a backward training pass in a distributed NN, in accordance with various embodiments.
Figure 5 illustrates an example technique of memory-efficient training in a distributed NN, in accordance with various embodiments.
Figure 6 illustrates an example technique of memory-efficient training in a distributed NN, in accordance with various embodiments.
Figure 7 illustrates an example technique for a memory-efficient training backward pass in a distributed NN, in accordance with various embodiments.
Figure 8 depicts an example artificial NNs (ANN).
Figure 9a illustrates an example accelerator architecture. Figure 9b illustrates an example components of a computing system.

### Detailed Description

In the following detailed description, reference is made to the accompanying drawings that form a part hereof wherein like numerals designate like parts throughout, and in which is shown by way of illustration embodiments that may be practiced. It is to be understood that other embodiments may be utilized and structural or logical changes may be made without departing from the scope of the present disclosure. Therefore, the following detailed description is not to be taken in a limiting sense, and the scope of embodiments is defined by the appended claims and their equivalents.
Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order than the described embodiment. Various additional operations may be performed and/or described operations may be omitted in additional embodiments.
The terms "substantially," "close," "approximately," "near," and "about," generally refer to being within +/- 10% of a target value. Unless otherwise specified the use of the ordinal adjectives "first," "second," and "third," etc., to describe a common object, merely indicate that different instances of like objects are being referred to, and are not intended to imply that the objects so described must be in a given sequence, either temporally, spatially, in ranking or in any other manner.
For the purposes of the present disclosure, the phrases "A and/or B" and "A or B" mean (A), (B), or (A and B). For the purposes of the present disclosure, the phrase "A, B, and/or C" means (A), (B), (C), (A and B), (A and C), (B and C), or (A, B, and C).

The description may use the phrases "in an embodiment," or "in embodiments," which may each refer to one or more of the same or different embodiments. Furthermore, the terms "comprising," "including," "having," and the like, as used with respect to embodiments of the present disclosure, are synonymous.

As used herein, the term "circuitry" may refer to, be part of, or include an Application Specific Integrated Circuit (ASIC), an electronic circuit, a processor (shared, dedicated, or group), a combinational logic circuit, and/or other suitable hardware components that provide the described functionality. As used herein, "computer-implemented method" may refer to any method executed by one or more processors, a computer system having one or more processors, a mobile device such as a smartphone (which may include one or more processors), a tablet, a laptop computer, a set-top box, a gaming console, and so forth.

Generally, ML involves programming computing systems to optimize a performance criterion using example (training) data and/or past experience. ML refers to the use and development of computer systems that are able to learn and adapt without following explicit instructions, by using algorithms and/or statistical models to analyze and draw inferences from patterns in data. ML involves using algorithms to perform specific task(s) without using explicit instructions to perform the specific task(s), but instead relying on learned patterns and/or inferences. ML uses statistics to build mathematical model(s) (also referred to as "ML models" or simply "models") in order to make predictions or decisions based on sample data (e.g., training data). The model is defined to have a set of parameters, and learning is the execution of a computer program to optimize the parameters of the model using the training data or past experience. The trained model may be a predictive model that makes predictions based on an input dataset, a descriptive model that gains knowledge from an input dataset, or both predictive and descriptive. Once the model is learned (trained), it can be used to make inferences (e.g., predictions).

ML algorithms perform a training process on a training dataset to estimate an underlying ML model. An ML algorithm is a computer program that learns from experience with respect to some task(s) and some performance measure(s)/metric(s), and an ML model is an object or data structure created after an ML algorithm is trained with training data. In other words, the term "ML model" or "model" may describe the output of an ML algorithm that is trained with training data. After training, an ML model may be used to make predictions on new datasets. Additionally, separately trained AI/ML models can be chained together in a AI/ML pipeline during inference or prediction generation. Although the term "ML algorithm" refers to different concepts than the term "ML model," these terms may be used interchangeably for the purposes of the present disclosure. Any of the ML techniques discussed herein may be utilized, in whole or in part, and variants and/or combinations thereof, for any of the example embodiments discussed herein.

ML may require, among other things, obtaining and cleaning a dataset, performing feature selection, selecting an ML algorithm, dividing the dataset into training data and testing data, training a model (e.g., using the selected ML algorithm), testing the model, optimizing or tuning the model, and determining metrics for the model. Some of these tasks may be optional or omitted depending on the use case and/or the implementation used.

ML algorithms accept model parameters (or simply "parameters") and/or hyperparameters that can be used to control certain properties of the training process and the resulting model. Model parameters are parameters, values, characteristics, configuration variables, and/or properties that are learned during training. Model parameters are usually required by a model when making predictions, and their values define the skill of the model on a particular problem. Hyperparameters at least in some embodiments are characteristics, properties, and/or parameters for an ML process that cannot be learned during a training process. Hyperparameter are usually set before training takes place, and may be used in processes to help estimate model parameters.

As previously noted, large deep NNs (DNNs) may be trained in a distributed setting. As used herein, a "distributed" setting relates to systems and/or networks wherein a training process is distributed across a plurality of machines that work together. Such machines may also be referred to herein as "worker nodes" or "workers." A "worker" or machine may be an electronic device such as a processor, a core of a multi-core processor, a standalone electronic device or compute node (e.g., a computer, laptop, appliance, or server), etc. Additionally or alternatively, a "worker" may be a cluster or other grouping of compute nodes. Additionally or alternatively, a "worker" may be a virtual machine, container, application, and/or other element/entity running on a compute node or other electronic device. In one example implementation, a distributed setting for training an NN/DNN may include a data center, server farm, etc. of a cloud computing service where one or more cloud compute nodes are employed as individual workers. In another example implementation, a distributed setting for training an NN/DNN may include an edge computing framework where one or more edge compute nodes are employed as individual workers. In another example implementation, a distributed setting for training an NN/DNN may involve a heterogeneous federated training framework where multiple different devices (e.g., client devices, servers, base stations, access points, network elements, etc.) are employed as individual worker nodes.

Typically, training of a NN may be considered to involve two primary functions. A "training pass" may include a "forward pass" and a "backward pass." Initially, each input of a set of inputs are analyzed in the context of itself and one or more other inputs that are within a vicinity of the initial input. Based on this analysis, a weighting value may be identified that is associated with the input. This function is typically referred to as the "forward pass" of training. Subsequently, the next function to occur may be the "backward pass" of training. A backward pass refers to identification of an error related to a node, as well as an identification of a degree of error, which is attributable to each of the nodes used to generate the values of the initial node. This error is used to modify a weight or data value of each of the nodes used for the training of the initial node. This process may be iteratively repeated until the error values are within an acceptable threshold (which may be predefined or dynamic based on one or more other parameters of the NN). The backward pass is commonly implemented using an algorithm called "backpropagation," which refers to a method used in NNs to calculate a gradient that is needed in the calculation of the weight updates. The weight updates are a set of changes (each defined by both a magnitude and sign) to the network parameters, that if used to change the weights would result in a reduction of the errors the network makes.

Distributing NN training may provide two benefits. First, the distributed training may accelerate the training process by leveraging the computational resources of several machines. Second, distributed training may allow for the training of large networks that may not be able to fit within the memory of a single machine.

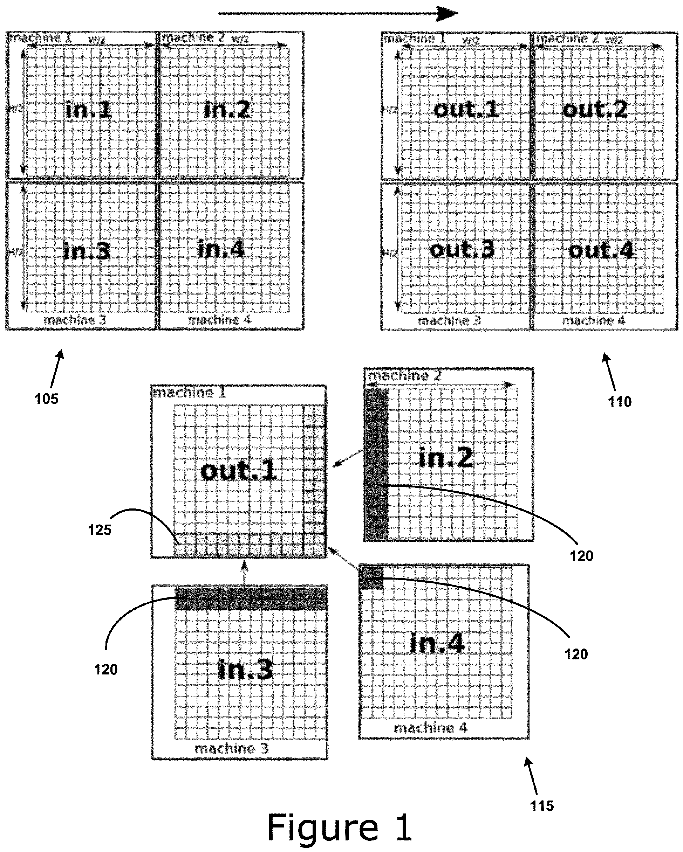

Generally, there are several legacy parallelization schemes for partitioning the training problem across multiple machines. One such scheme is domain-parallel training (which may also be referred to as spatial parallelism). Domain-parallel training may be a parallelization scheme that splits the input to a NN into several parts, and each part is processed by a different machine. One example of domain parallelism is shown in Figure 1.

Figure 1 illustrates an example of distributed training for a NN, in accordance with various embodiments. Specifically, Figure 1 shows domain/spatial parallelism when processing an $H \times W$ input image using a one-layer CNN, where an image is split into four quadrants, and each quadrant is processed by a different machine. In Figure 1, an input image of size height ($H$) x width ($W$) pixels is used to train a single-layer convolutional NN (CNN). The image is split into four parts of sizes H/2 x W/2 pixels: *in.1, in.2, in.3,* and *in.4,* which are each processed by a different machine (machine 1, machine 2, machine 3, and machine 4) as can be seen at section 105. The NN may produce four partitioned outputs: *out.1, out.2, out.3,* and *out.4,* which may have the same size as the various inputs, as shown at section 110.

As may be seen at section 115 of Figure 1, the partitioned output at each machine may depend on both the input of that machine, as well as at least a portion of the input partition of another machine. In order to calculate the output pixels 125 in machine 1, machine 1 may need to fetch the input pixels 120 from the other workers 2, 3, and 4. For example, and for the sake of discussion of Figure 1, it may be assumed that each output pixel (e.g., each of pixel illustrated at 110) is dependent on input pixels (e.g., pixels depicted in 105) that are less than two rows away and less than two columns away from it. The output pixels at partition boundaries would thus depend on input pixels in other partitions as shown at 115. Parts of the input that are needed by multiple machines may be referred to herein as "partition-crossing inputs." Specifically, the shaded output pixels of *out.1* at 125 may depend on the partition-crossing input pixels 120 of *in.2, in.3,* and *in.4* as depicted in Figure 1.

However, the use of partition-crossing inputs may present issues with respect to legacy implementations of domain parallelism. Specifically, in legacy domain-parallel implementations, machine 1 in Figure 1 may be required to fetch the partition-crossing input pixels 120 of in.2, *in.3,* and in.4 and then store the partition-crossing input pixels 120 of *in.2, in.3,* and *in.4* for the entirety of the training iteration. Under legacy training techniques, worker 1 would be unable to delete the remotely-fetched data until after the backward pass of training is complete. As the networks get deeper, the number of machines and partitions may grow, resulting in the memory overhead of duplication of the partition-crossing inputs in several machines becoming undesirably large. This data redundancy (e.g., storing the same data in several machines) may make it difficult to train large NNs without running out of memory.

Typically, domain-parallel training may be applied in two primary types of NNs. The first is a CNN, as described above. For domain-parallel training in a CNN, an input image space is divided into two or more parts. Each machine executes the full forward and backward training passes on one part of the image space as described above with respect to Figure 1. As described, legacy techniques may have involved replicating portions of the image (e.g., the partition-crossing input pixels 120) across a plurality of machines.

The second type of network is a graph NN (GNN). Generally, a GNN is a network that is based on the use of graphs. Each node in a graph may have an input feature vector associated with it. A GNN layer produces an output feature vector for each node in the graph by aggregating input features from its neighbors in the graph.

Legacy domain-parallel training methods may accept the memory overhead of duplicating the partition-crossing inputs. As models and data get bigger, this duplication places a strain on the memory requirements, and limits the scale of the models that can be trained.

Embodiments herein relate to a technique to reduce or resolve the memory redundancy problem of domain-parallel training. Specifically, embodiments relate to a training technique that reduces or minimizes the duplication of partition-crossing inputs across the various training machines. Embodiments may be related to, or realized on, a CNN or a GNN, as described above.

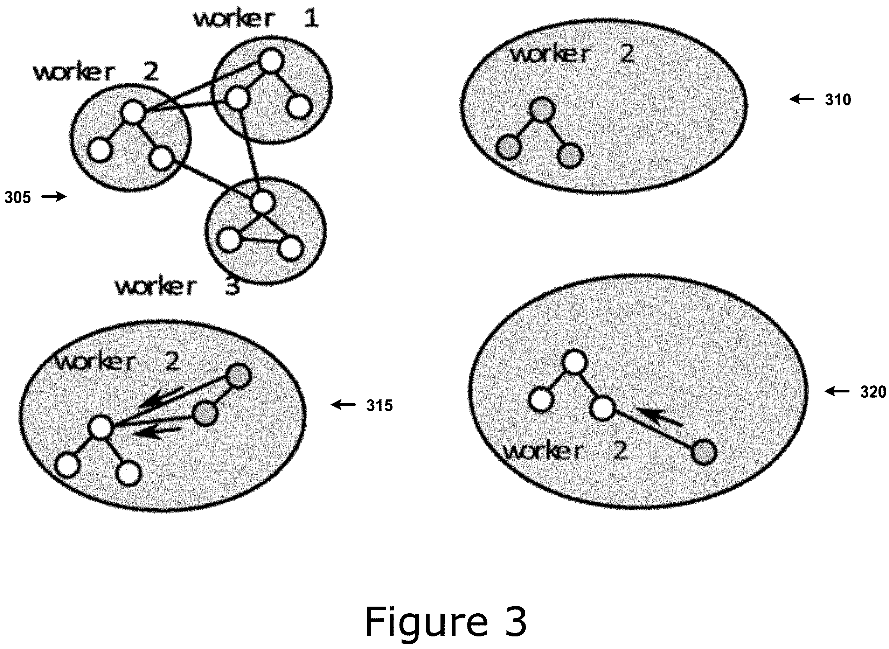

In domain-parallel training, each worker may need to store the remotely-fetched domain-crossing inputs until the backward pass is complete. The embodiments herein provided a modified training technique, which may be referred to as "sequential aggregation and rematerialization." Figure 3 (discussed infra) shows an example of this technique for a GNN. In embodiments, during the forward pass a machine may be able to delete remotely-fetched data (e.g., data from another machine of the GNN) after using that data. In some implementations, the deletion of the remotely-fetched data may be performed immediately after using the fetched data. As such, the remotely-fetched data may not accumulate in a machine (which would cause the above-described memory concern). Then, during the backward pass portion of the training stage, the machine may re-fetch the remote partition-crossing input data. After processing the re-fetched data, the machine may be configured to delete such data. As such, embodiments may avoid the accumulation of remotely-fetched domain-crossing input data at each machine, thereby improving the memory efficiency of the domain-parallel training.

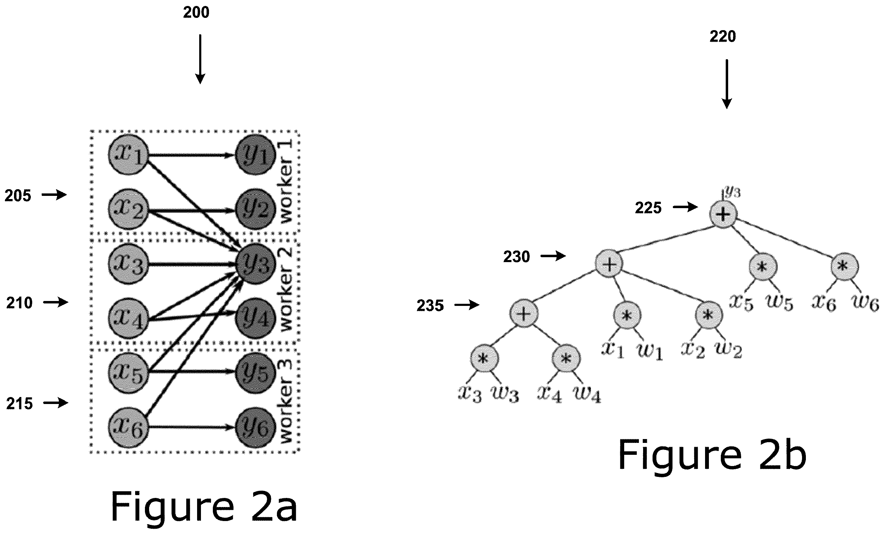

Embodiments may provide a number of advantages. The embodiments herein reduce duplicate storage of partition-crossing inputs across multiple workers in domain-parallel training. This is achieved by avoiding storing remotely-fetched inputs during the forward pass and, instead, re-fetching these remote inputs as needed during the backward pass when training an ML model such as a DNN and/or the like. For example, embodiments may improve the memory efficiency of the domain-parallel training, as described previously, thereby allowing the NNs to scale to bigger models and larger input datasets. Additionally or alternatively, embodiments may allow for increases in training efficiency for existing models in terms of memory and compute resource. Figures 2a and 2b (collectively, "Figure 2") illustrate an example of a CGs of distributed training of a network, in accordance with various embodiments.

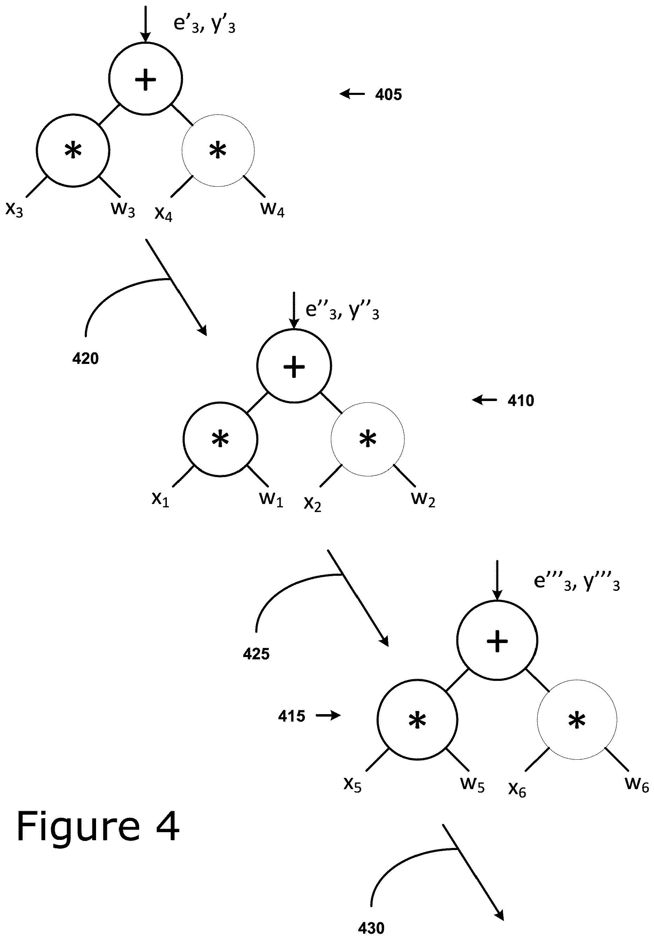

For the sake of the example depicted in Figures 2 (and, subsequently, Figures 3 and 4), let $X \in R^{Nin \times Fin}$ be an $N_{in} \times F_{in}$ input matrix. A NN layer (e.g., a layer of a GNN as described previously) operates on X to produce the output matrix $Y \in R^{Nout \times Fout}$. In this specific example, each row of Y depends on a subset of rows of X. This dependency may be represented in graph form as in the example in Figure 2a.

More specifically, as can be seen in the example 200 of Figure 2a, three workers may be depicted such as worker_1 205, worker_2 210, and worker_3 215. Worker_1 at 205 may be configured to process nodes 1 and 2 which have inputs $x_1$ and $x_2$ and outputs $y_1$ and $y_2$. Worker_2 at 210 may be configured to process nodes 3 and 4, which have inputs $x_3$ and $x_4$ and outputs $y_3$ and $y_4$. Worker_3 at 215 may be configured to process nodes 5 and 6, which have inputs $x_5$ and $x_6$, and outputs $y_5$ and $y_6$. As may be seen, outputs $y_1$, $y_2$, $y_4$, $y_5$, and $y_6$ may be respectively dependent on a single input (e.g., $x_1$, $x_2$, $x_4$, $x_5$, and $x_6$). However, output $y_3$ may be dependent on each of the inputs $x_1$ through $x_6$. Therefore, in this example, inputs $x_1$, $x_2$, $x_5$, and $x_6$ may be considered to be partition-crossing inputs for output $y_3$. It will be understood that although each node is described as having a single input and a single output, in other embodiments one or more nodes have a plurality of inputs and/or a plurality of outputs.

A naive forward pass of the training loop may be used to calculate y3 as shown in Figure 2b. Specifically, a CGs 220 may be generated by worker_2 210 based on the data retrieved from worker_1 205, and worker_3 215. For example, as can be seen y3 may be based on the summation of the data 235 at worker_2 (e.g., $x_3$ and $x_4$ along with corresponding weights $w_3$ and $w_4$), the data 230 at worker_1 (e.g., $x_1$ and $x_2$ along with corresponding weights $w_1$ and $w_2$), and the data 225 at worker_3 (e.g., $x_5$ and $x_6$ along with corresponding weights $w_5$ and $w_6$).

As used herein, the term "computational graph" (or "CG") may refer to a data structure that describes how the output is produced from the inputs. One purpose of the CGs is to allow the backpropagation of gradients from the output to the input during the backward pass. The backward pass starts by calculating the gradient of the error w.r.t (with respect to) the output (y3 for example). The backpropagation algorithm then uses the CGs to obtain the gradient of the error w.r.t the inputs using the chain rule from basic calculus. In the approach of Figure 2b, the entire input is materialized at worker 2 as part of its CGs, which could be memory expensive and negates the memory advantage of distributed training. By contrast, embodiments herein may avoid this situation by never constructing the CGs during the forward pass.

In some embodiments, the weights (e.g., $w_1$ through $w_6$) may be stored on the machine that is processing the node with which the weights are associated. For example, $w_1$ and $w_2$ may be stored on worker_1 205, $w_3$ and $w_4$ may be stored on worker_2 210, etc. In this embodiment, worker_2 210 may fetch both the input values (e.g., $x_1$, $x_2$, etc.) from the different workers, as well as the weight values (e.g., $w_1$, $w_2$, etc.). In another embodiment, the weights may additionally or alternatively be stored on each of the workers. In this case, worker_2 210 would fetch the various input values from workers 1 205 and 3 215, and would otherwise look up the weighting values from local storage.

The training scheme described herein may initialize an accumulator variable for y3 at worker_2 to zero. It then fetches the remote inputs one by one, multiplies these inputs by their corresponding weights, and adds the result to the accumulator. After fetching and using a remote input to update the accumulator for y3, the remote input may then be deleted without constructing a CGs. As used herein, the term "delete" is intended as a generalized term to remove the data from local memory or storage. In some embodiments, such deletion may include overwriting the data, while in other embodiments such deletion may only include removing or overwriting pointers that point to the location at which the data is stored in local memory. By deleting the data used to calculate y3, embodiments may reduce or eliminate the memory concerns described above because even though y3 depends on all the inputs, all the inputs are never stored at once at worker_2, but are instead fetched one by one and deleted as soon as they are used.

Subsequently, a backward pass is then executed as depicted at Figure 4. As noted, embodiments herein relate to a successive rematerialization scheme that avoids retaining the CGs 220 used during the forward pass of the training phase. Specifically, as generally shown in Figure 4, the necessary data may be re-fetched and used to generate portions of the CGs 220 such that the CGs is re-constructed piece by piece during the backward pass. As shown in Figure 4, once the error related to $y_3$ (which may be referred to as "error $e_3$" and which may be the derivative of the loss function with respect to $y_3$), worker_2 may sequentially fetch the variables on which $y_3$ depends in order to reconstruct the CG piece by piece. Additionally, as worker_2 continues the backward training pass, each piece of the CG may be deleted before the next piece of the CG is constructed. Using this scheme, is it possible to decrease the memory consumption per worker, as the worker does not need to construct the full CG at once.

Figure 3 illustrates an example of a backwards pass during training in a distributed NN, in accordance with various embodiments. It will be understood that the example of Figure 3 is intended as a high-level example and may use terminology similar to the terminology used with Figures 2 or 4, but is predicated on a different data set. For example, there is no node in Figure 3 that is dependent on inputs from all other nodes.

As can be seen at 305, certain nodes of worker_2 may be dependent on the values of other nodes of worker_1 and worker_3. These dependencies are illustrated by the lines between nodes. Initially, at 310, worker_2 may process data from within a local partition. Then, worker_2 may sequentially fetch, process, and then delete partition-crossing inputs from other workers. Specifically, at 315, worker_2 fetches nodes from worker_1, processes the data from those nodes, and then deletes the data fetched from worker_1. At 320, worker_2 fetches data from nodes of worker_3, processes that data, and then deletes the data fetched from worker 3. The backward training pass discussed herein may accommodate the deleted information.

In traditional domain-parallel training schemes, updating the node features in worker_2 would start by performing local processing within the local graph partition, followed by fetching and processing data related to nodes connected to the local partition from other workers. All remotely-fetched nodes would have to be kept in memory in order to execute the backward pass and/or backpropagation. Specifically, worker_2 would need to fetch input node features from other workers in order to calculate the output feature vectors for nodes in its local partition. Due to duplication of domain-crossing inputs, the combined memory consumption in all workers can be up to five times the memory needed to store the unduplicated input.

Figure 4 illustrates an example of the generation and deletion of CGs during a backward training pass in a distributed NN, in accordance with various embodiments. Specifically, as shown in Figure 4, a first portional CG may be generated at 405. The portional CG at 405 may relate to data of worker_2. A portion of the data of the output $y_3$ and associated error $e_3$ may be provided to, generated by, or otherwise retrieved by worker_2. Specifically, worker_2 may retrieve or generate data related to the portion of $y_3$ and its associated error $e_3$ that are related to the inputs $x_3$ and $x_4$. Such data is referred to herein as "y'$_3$" and "e'$_3$." y'$_3$ and e'$_3$ may be used during the backward training pass to alter or otherwise update one or more of $x_3$, $w_3$, $x_4$, and $w_4$. Subsequently, at 420, worker_2 may delete data such as y'3, e'3, and/or the portional CGs 405.

Worker_2 may then generate a second portional CG at 410. The portional CG at 410 may relate to data of worker_1. Worker_2 may fetch $x_1$ and $x_2$ from worker_1 (and, optionally, $w_1$ and $w_2$ as described above). Additionally, worker_2 may fetch or otherwise generate data related to the portion of $y_3$ and $e_3$ that are related to the inputs $x_1$ and $x_2$. Such data is referred to herein as "y"3" and "e"$_3$." y"$_3$ and e"$_3$ may be used during the backward training pass to alter or otherwise update one or more of $x_1$, $w_1$, $x_2$, and $w_2$. Subsequently, at 425, worker_2 may delete data such as y"$_3$, e"$_3$, $x_1$, $x_2$, $w_1$, $w_2$, and/or the portional CG 410.

Worker_2 may then generate a third portional CG at 415. The portional CG at 415 may relate to data of worker_3. Worker_2 may fetch $x_5$ and $x_6$ from worker_3 (and, optionally, $w_5$ and $w_6$ as described above). Additionally, worker_2 may fetch or otherwise generate data related to the portion of $y_3$ and $e_3$ that are related to the inputs $x_5$ and $x_6$. Such data is referred to herein as "y'''$_3$" and "e'''$_3$." y'''$_3$ and e'''$_3$ may be used during the backward training pass to alter or otherwise update one or more of $x_5$, $w_5$, $x_6$, and $w_6$. Subsequently, at 430, worker_2 may delete data such as y'''$_3$, e'''$_3$, $x_5$, $x_6$, $w_5$, $w_6$, and/or the portional CG 415.

The above-described examples of training are intended as a highly simplified example of the embodiments herein. Other embodiments may have more or fewer workers or nodes, workers and/or nodes with different dependencies, etc.

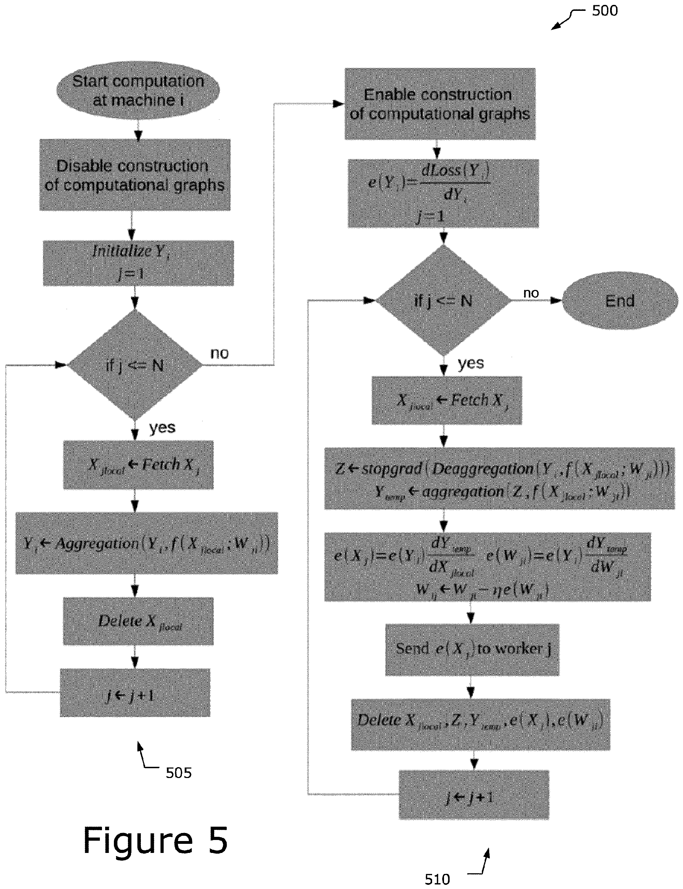

Figure 5 illustrates an example process 500 for memory-efficient processing and backpropagation in a NN, in accordance with various embodiments. For the sake of the example process 500 of Figure 5, one may assume the existence of a set of N input tensors (which may not necessarily be of the same size as one another): $\{\mathbf{X}_1, ..., \mathbf{X}_N\}$. A NN layer may act on this set of input tensors to produce N output tensors $\{\mathbf{Y}_1, ... , \mathbf{Y}_N\}$. The input tensors may be, for example, the actual inputs to the network or the outputs of a previous layer. The NN layer may be parameterized by the weight tensors $\{\mathbf{W}_{ij}\}$ where $i = 1,..., N$ and $j = 1, ... , N$. For this example, let $f(\mathbf{x};\mathbf{w})$ be a general function that has parameters $\mathbf{w}$ and acts on the input $\mathbf{x}$. The output of the NN layer may then be given by:

$$\mathbf{Y}_i = Aggregation(f(\mathbf{X}_1;\mathbf{W}_{1i}), f(\mathbf{X}_2;\mathbf{W}_{2i}),...,f(\mathbf{X}_N;\mathbf{W}_{Ni})), \text{ where } i=1,..,N \quad \text{(Equation 1)}$$

In equation 1, *Aggregation*() is a general function that may take any number of inputs to produce only one output (for example the sum function, the product function, etc.).

The set of parameters $\{W_{i,j}\}$ are trained to obtain a desired relation between the inputs $\{X_1,...,X_N\}$ and the outputs $\{Y_1,...,Y\}$. Note that this example is based on the most general case of a fully connected dependency graph, where every output tensor depends on all input tensors. If, for a particular network layer, output $Y_i$ does not depend on input $X_j$, then $f(X_j;W_{ji})$ may be removed from the aggregation in Equation 1.

Training may then be distributed across N machines in domain-parallel fashion, as described above. Machine i may receive input $X_i$ and be tasked with producing the output $Y_i$. The machines may be communicatively coupled with one another. In embodiments herein, the following recursive condition may be imposed on the *Aggregation* function of equation 2:

$$Aggregation(A,B,C) = Aggregation(A,Aggregation(B,C)). \quad \text{(Equation 2)}$$

Further, a complement of the *Aggregation* function may be defined as *Deaggregation* such that if Z = *Aggregation* (A,B) then A = *Deaggregation*(Z,B) and B = *Deaggregation*(Z,A). One example of these two functions is *Aggregation*(A,B) = A+B and *Deaggregation*(Z,B) = Z-B. Another example is *Aggregation*(A,B) = A * B and *Deaggregation*(Z,B) = Z/B.

Figure 5 shows an example of a complete training iteration at machine i based on the above constraints. The left column 505 in the flowchart of Figure 5 depicts an example of the forward pass of the training algorithm, while the right column 510 depicts an example of the backward pass of the training algorithm (e.g., backpropagation). It will be noted that the forward pass 505 may be executed without constructing any CGs, so remote inputs do not get cumulatively stored in memory, but are deleted as soon as they are used as described above. In one embodiment, once $Y_i$ is obtained, it is passed to the next layer and the machine i waits for the error of the training loss to be passed from higher-layer machines. Alternatively, in other embodiments if machine *i* is at the top layer of the network, then the machine *i* may directly compute the error of the loss with respect to $Y_i$ (the derivative of the loss with respect to $Y_i$). Once the error

$$e(Y_i) = \frac{dLoss}{dY_i}$$

is identified, generated, or otherwise obtained, then machine *i* may execute the backward pass at 510 for the subject layer.

During the backward pass at 510, machine i may fetch an input $X_j$ during each iteration and use this input to reconstruct the part of the CGs involving this particular input and the output. Specifically, machine i may first obtain Z, which is the component of $Y_i$ that does not contain the contribution of $X_j$. It will be noted that the *stopgrad* operation may prevent any subsequent derivatives from seeing the dependence of Z on $X_j$. In other words, Z may henceforth be treated as a constant. The Aggregation operation may be repeated to produce $Y_{temp}$ from $X_j$ and Z. Note that by the definition of the *Aggregation* and *Deaggregation* operator, $Y_{temp} = Y_i$. $Y_{temp}$ may be used to obtain a CGs relating input $X_j$ to the output.

It is then possible to obtain the derivative of $Y_{temp}$ with respect to the parameters $W_{ji}$ and use the chain rule to update the weights using gradient descent (i.e, modifying the weights in the negative direction of the gradient of the loss with respect to the weight). The technique may also involve using the chain rule to obtain the gradient of the loss with respect to the input $X_j$. $e(X_j)$ and send $e(X_j)$ back to worker *j*. If $X_j$ was produced by an earlier layer, then this error, $e(X_j)$, may be passed to this earlier layer.

It will be noted that, as described above, the remotely-fetched inputs are deleted at the end of every iteration of the backward pass. Therefore, like in the forward pass, the system is able to avoid cumulatively storing remote inputs in memory.

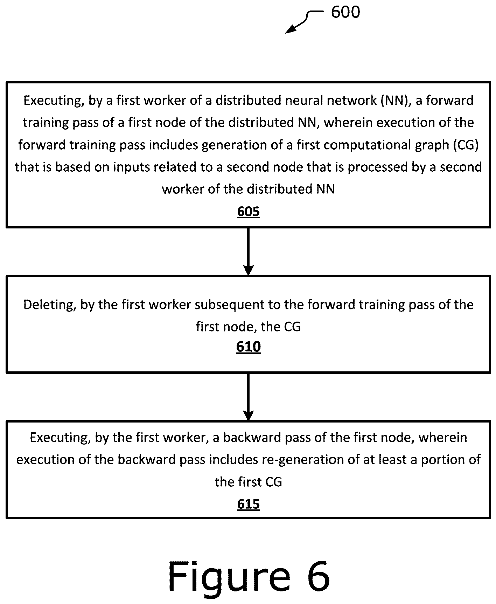

Figure 6 illustrates an example technique 600 of memory-efficient training in a distributed NN, in accordance with various embodiments. Generally, the technique 600 may be executed by a worker such as worker_2 210 as described above.

The technique 600 may include executing, at 605 by a first worker of a distributed NN, a forward training pass of a first node of the distributed NN. Execution of the forward training pass may include generation of a first CG that is based on inputs related to a second node that is processed by a second worker of the distributed NN. The first CG may be, for example, the CG depicted at 220. The second node may be, for example, a node such as a node of worker_1 at 205 or worker_3 at 215.

The technique 600 may further include deleting, at 610 by the first worker subsequent to the forward training pass of the first node, the CG. For example, as described above, the CG may not be retained subsequent to the forward training pass for the sake of memory efficiency.

The technique 600 may further include executing, by the first worker at 615, a backward pass of the first node, wherein execution of the backward pass includes re-generation of at least a portion of the first CG. For example, the first worker may reconstruct portions of the CG as described above with respect to Figure 4. In this manner, the backward pass may be performed in a more memory-efficient manner as described above.

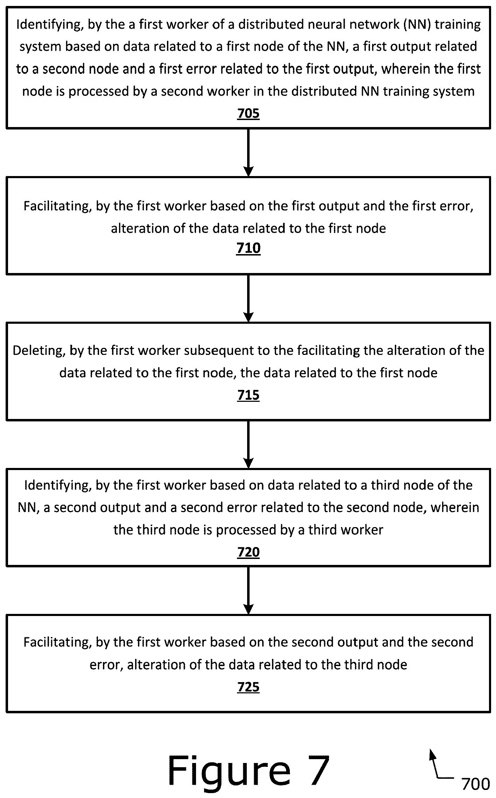

Figure 7 illustrates an example technique 700 for a memory-efficient training backward pass in a distributed NN, in accordance with various embodiments. Similar to technique 600, the technique 700 may be performed by a worker such as worker_2 210 as described above. In some embodiments, the technique 700 may be considered to be, be part of, or otherwise be related to element 615 of Figure 6.

The technique 700 may include identifying, at 705 by a first worker of a distributed NN training system based on data related to a first node of the NN, a first output related to a second node and a first error related to the first output, wherein the first node is processed by a second worker in the distributed NN training system. The first worker may be, for example, worker_2 210 as described above at 410. The first output may be, for example, $y''_3$, and the first error may be, for example $e''_3$ as described above. The data related to the first node may be, for example, $x_1$ and/or $w_1$ as described above at 410.

The technique 700 may further include facilitating, at 710 by the first worker based on the first output and the first error, alteration of the data related to the first node. Alteration of the data may be or relate to updating $x_1$ or $w_1$. For example, if the weights (e.g., $w_1$) are stored at worker_2, then worker_2 may update $w_1$. Additionally or alternatively, worker_2 may pass an indication to worker_1 to update one or both of $x_1$ and $w_1$.

The technique 700 may further include deleting, at 715 by the first worker subsequent to the facilitating the alteration of the data related to the first node, the data related to the first node. Such deletion may be similar to, for example, the deletion described with respect to element 425.

The technique 700 may further include identifying, at 720 by the first worker based on data related to a third node of the NN, a second output and a second error related to the second node, wherein the third node is processed by a third worker. As described with respect to element 415, the second output may be, for example, $y'''_3$ and the second error may be, for example, $e'''_3$. The data related to the second node may be, for example, $x_5$ and/or $w_5$.

The technique 700 may further include facilitating, at 725 by the first worker based on the second output and the second error, alteration of the data related to the third node. The alteration of the data may be or relate to updating $x_5$ or $w_5$ as described with respect to element 710.

It will be understood that the techniques 600 and 700 are described herein as illustrative examples of one embodiment, and other embodiments may vary. For example, other embodiments may have more or fewer elements, elements that occur in a different order, etc.

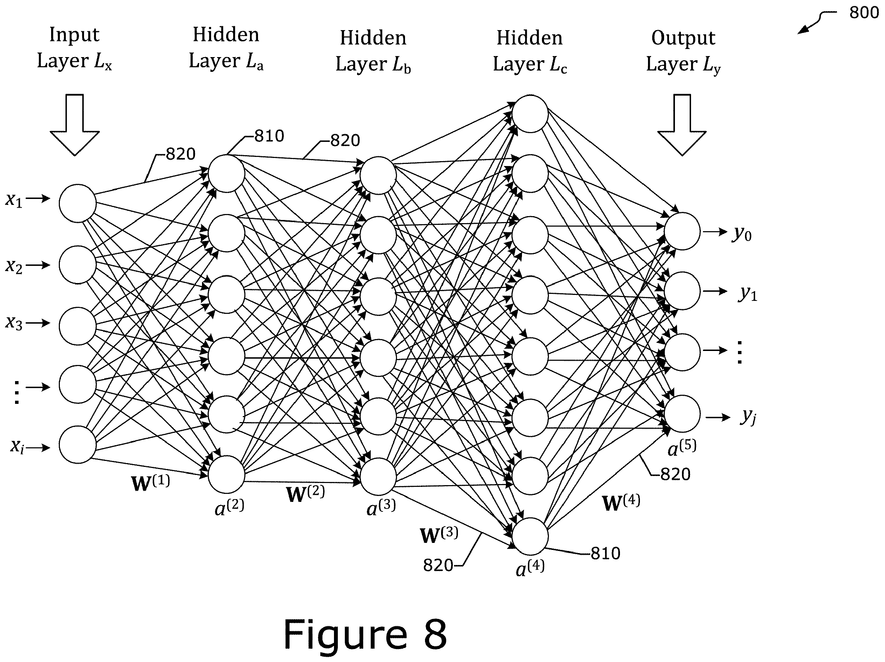

ML techniques generally fall into the following main types of learning problem categories: supervised learning, unsupervised learning, and reinforcement learning. Supervised learning involves building models from a set of data that contains both the inputs and the desired outputs. Unsupervised learning is an ML task that aims to learn a function to describe a hidden structure from unlabeled data. Unsupervised learning involves building models from a set of data that contains only inputs and no desired output labels. Reinforcement learning (RL) is a goal-oriented learning technique where an RL agent aims to optimize a long-term objective by interacting with an environment. Some implementations of AI and ML use data and NNs in a way that mimics the working of a biological brain. An example of such an implementation is shown by Figure 8.

Figure 8 illustrates an example NN 800, which may be suitable for use by one or more of the computing systems (or subsystems) of the various implementations discussed herein, implemented in part by a hardware accelerator, and/or the like. The NN 800 may be DNN used as an artificial brain of a compute node or network of compute nodes to handle very large and complicated observation spaces. Additionally or alternatively, the NN 800 can be some other type of topology (or combination of topologies), such as a convolution NN (CNN), deep CNN (DCN), recurrent NN (RNN), Long Short Term Memory (LSTM) network, a Deconvolutional NN (DNN), gated recurrent unit (GRU), deep belief NN, a feed forward NN (FFN), a deep FNN (DFF), deep stacking network, Markov chain, perception NN, Bayesian Network (BN) or Bayesian NN (BNN), Dynamic BN (DBN), Linear Dynamical System (LDS), Switching LDS (SLDS), Optical NNs (ONNs), an NN for RL and/or deep RL (DRL), and/or the like. NNs are usually used for supervised learning, but can be used for unsupervised learning and/or RL.

The NN 800 may encompass a variety of ML techniques where a collection of connected artificial neurons 810 that (loosely) model neurons in a biological brain that transmit signals to other neurons/nodes 810. The neurons 810 may also be referred to as nodes 810, processing elements (PEs) 810, or the like. The connections 820 (or edges 820) between the nodes 810 are (loosely) modeled on synapses of a biological brain and convey the signals between nodes 810. Note that not all neurons 810 and edges 820 are labeled in Figure 8 for the sake of clarity.

Each neuron 810 has one or more inputs and produces an output, which can be sent to one or more other neurons 810 (the inputs and outputs may be referred to as "signals"). Inputs to the neurons 810 of the input layer $L_x$ can be feature values of a sample of external data (e.g., input variables $x_i$). The input variables $x_i$ can be set as a vector containing relevant data (e.g., observations, ML features, etc.). The inputs to hidden units 810 of the hidden layers $L_a$, $L_b$, and $L_c$ may be based on the outputs of other neurons 810. The outputs of the final output neurons 810 of the ouput layer $L_y$ (e.g., output variables $y_j$) include predictions, inferences, and/or accomplish a desired/configured task. The

output variables $y_j$ may be in the form of determinations, inferences, predictions, and/or assessments. Additionally or alternatively, the output variables $y_j$ can be set as a vector containing the relevant data (e.g., determinations, inferences, predictions, assessments, and/or the like).

In the context of ML, an "ML feature" (or simply "feature") is an individual measureable property or characteristic of a phenomenon being observed. Features are usually represented using numbers/numerals (e.g., integers), strings, variables, ordinals, real-values, categories, and/or the like. Additionally or alternatively, ML features are individual variables, which may be independent variables, based on observable phenomenon that can be quantified and recorded. ML models use one or more features to make predictions or inferences. In some implementations, new features can be derived from old features.

Neurons 810 may have a threshold such that a signal is sent only if the aggregate signal crosses that threshold. A node 810 may include an activation function, which defines the output of that node 810 given an input or set of inputs. Additionally or alternatively, a node 810 may include a propagation function that computes the input to a neuron 810 from the outputs of its predecessor neurons 810 and their connections 820 as a weighted sum. A bias term can also be added to the result of the propagation function.

The NN 800 also includes connections 820, some of which provide the output of at least one neuron 810 as an input to at least another neuron 810. Each connection 820 may be assigned a weight that represents its relative importance. The weights may also be adjusted as learning proceeds. The weight increases or decreases the strength of the signal at a connection 820.

The neurons 810 can be aggregated or grouped into one or more layers L where different layers L may perform different transformations on their inputs. In Figure 8, the NN 800 comprises an input layer $L_x$, one or more hidden layers $L_a$, $L_b$, and $L_c$, and an output layer $L_y$ (where $a$, $b$, $c$, $x$, and y may be numbers),where each layer $L$ comprises one or more neurons 810. Signals travel from the first layer (e.g., the input layer $L_1$), to the last layer (e.g., the output layer $L_y$), possibly after traversing the hidden layers $L_a$, $L_b$, and $L_c$ multiple times. In Figure 8, the input layer $L_a$ receives data of input variables $x_i$ (where $i$ = 1, ..., $p$, where $p$ is a number). Hidden layers $L_a$, $L_b$, and $L_c$ processes the inputs $x_i$, and eventually, output layer $L_y$ provides output variables $y_j$ (where $j$ = 1, ..., p', where p' is a number that is the same or different than p). In the example of Figure 8, for simplicity of illustration, there are only three hidden layers $L_a$, $L_b$, and $L_c$ in the ANN 800, however, the ANN 800 may include many more (or fewer) hidden layers $L_a$, $L_b$, and $L_c$ than are shown.

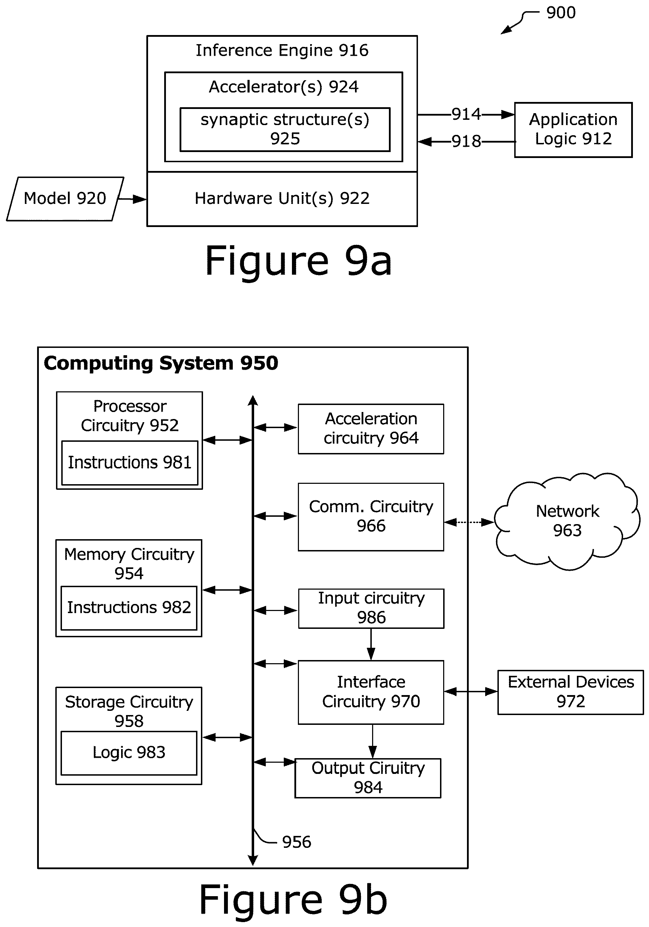

Figure 9a is an example accelerator architecture 900 for according to various embodiments. The accelerator architecture 900 provides NN functionality to application logic 912, and as such, may be referred to as a NN accelerator architecture 900, DNN accelerator architecture 900, and/or the like.

The application logic 912 may include application software and/or hardware components used to perform specification functions. The application logic 912 forwards data 914 to an inference engine 916. The inference engine 916 is a runtime element that delivers a unified application programming interface (API) that integrates a ANN (e.g., DNN(s) or the like) inference with the application logic 912 to provide a result 918 (or output) to the application logic 912.

To provide the inference, the inference engine 916 uses a model 920 that controls how the DNN inference is made on the data 914 to generate the result 918. Specifically, the model 920 includes a topology of layers of a NN. The topology includes an input layer that receives the data 914, an output layer that outputs the result 918, and one or more hidden layers between the input and output layers that provide processing between the data 14 and the result 918. The topology may be stored in a suitable information object, such as an extensible markup language (XML), JavaScript Object Notation (JSON), and/or other suitable data structure, file, and/or the like. The model 920 may also include weights and/or biases for results for any of the layers while processing the data 914 in the inference using the DNN

The inference engine 916 may be implemented using and/or connected to hardware unit(s) 922. The inference engine 916 at least in some embodiments is an element that applies logical rules to a knowledge base to deduce new information. The knowledge base at least in some embodiments is any technology used to store complex structured and/or unstructured information used by a computing system (e.g., compute node 950 of Figure 9). The knowledge base may include storage devices, repositories, database management systems, and/or other like elements.

Furthermore, the inference engine 916 includes one or more accelerators 924 that provide hardware acceleration for the DNN inference using one or more hardware units 922. The accelerator(s) 924 are software and/or hardware element(s) specifically tailored/designed as hardware acceleration for AI/ML applications and/or AI/ML tasks. The one or more accelerators 924 may include one or more processing element (PE) arrays and/or a multiply-and-accumulate (MAC) architecture in the form of a plurality of synaptic structures 925. The accelerator(s) 924 may correspond to the acceleration circuitry 964 of Figure 9 described infra.

The hardware unit(s) 922 may include one or more processors and/or one or more programmable devices. As examples, the processors may include central processing units (CPUs), graphics processing units (GPUs), dedicated AI accelerator ASICs, vision processing units (VPUs), tensor processing units (TPUs) and/or Edge TPUs, Neural Compute Engine (NCE), Pixel Visual Core (PVC), photonic integrated circuit (PIC) or optical/photonic computing device, and/or the like. The programmable devices may include, for example, logic arrays, programmable logic devices (PLDs) such as complex PLDs (CPLDs), field-programmable gate arrays (FPGAs), programmable ASICs, programmable System-on-Chip (SoC), and the like. The processor(s) and/or programmable devices may correspond to processor circuitry 952 and/or acceleration circuitry 964 of Figure 9.

Figure 9b illustrates an example of components that may be present in a compute node 950 for implementing the techniques (e.g., operations, processes, methods, and methodologies) described herein. Figure 9b provides a view of the components of node 950 when implemented as part of a computing device (e.g., as a mobile device, a base station, server computer, gateway, appliance, etc.). In some implementations, the compute node 950 may be an application server, edge server, cloud compute node, or the like that operates some or all of the processes of other Figures herein, discussed previously. The compute node 950 may include any combinations of the hardware or logical components referenced herein, and it may include or couple with any device usable with an edge communication network or a combination of such networks. The components may be implemented as ICs, portions thereof, discrete electronic devices, or other modules, instruction sets, programmable logic or algorithms, hardware, hardware accelerators, software, firmware, or a combination thereof adapted in the compute node 950, or as components otherwise incorporated within a chassis of a larger system. For one embodiment, at least one processor 952 may be packaged together with computational logic 982 and configured to practice aspects of various example embodiments described herein to form a System-in-Package (SiP) or a SoC.

The node 950 includes processor circuitry in the form of one or more processors 952. The processor circuitry 952 includes circuitry such as, but not limited to one or more processor cores and one or more of cache memory, low drop-out voltage regulators (LDOs), interrupt controllers, serial interfaces such as Serial Peripheral Interface (SPI), $I^2C$ or universal programmable serial interface circuit, real time clock (RTC), timer-counters including interval and watchdog timers, general purpose I/O, memory card controllers such as secure digital/multimedia card (SD/MMC) or similar, interfaces, mobile industry processor interface (MIPI) interfaces and Joint Test Access Group (JTAG) test access ports. In some implementations, the processor circuitry 952 may include one or more hardware accelerators (e.g., same or similar to acceleration circuitry 964), which may be microprocessors, programmable processing devices (e.g., FPGA, ASIC, etc.), or the like. The one or more accelerators may include, for example, computer vision and/or deep learning accelerators. In some implementations, the processor circuitry 952 may include on-chip memory circuitry, which may include any suitable volatile and/or non-volatile memory, such as DRAM, SRAM, EPROM, EEPROM, Flash memory, solid-state memory, and/or any other type of memory device technology, such as those discussed herein.

The processor circuitry 952 may include, for example, one or more processor cores (CPUs), application processors, GPUs, RISC processors, Acorn RISC Machine (ARM) processors, CISC processors, one or more DSPs, one or more FPGAs, one or more PLDs, one or more ASICs, one or more baseband processors, one or more radio-frequency integrated circuits (RFIC), one or more microprocessors or controllers, a multi-core processor, a multithreaded processor, an ultra-low voltage processor, an embedded processor, or any other known processing elements, or any suitable combination thereof. The processors (or cores) 952 may be coupled with or may include memory/storage and may be configured to execute instructions 981 stored in the memory/storage to enable various applications or operating systems to run on the platform 950. The processors (or cores) 952 is configured to operate application software to provide a specific service to a user of the platform 950. In some embodiments, the processor(s) 952 may be a special-purpose processor(s)/controller(s) configured (or configurable) to operate according to the various embodiments herein.

As examples, the processor(s) 952 may include an Intel® Architecture Core™ based processor such as an i3, an i5, an i7, an i9 based processor; an Intel® microcontroller-based processor such as a Quark™, an Atom™, or other MCU-based processor; Pentium® processor(s), Xeon® processor(s), or another such processor available from Intel® Corporation, Santa Clara, California. However, any number other processors may be used, such as one or more of Advanced Micro Devices (AMD) Zen® Architecture such as Ryzen® or EPYC® processor(s), Accelerated Processing Units (APUs), MxGPUs, or the like; A5-A12 and/or S1-S4 processor(s) from Apple® Inc., Snapdragon™ or Centriq™ processor(s) from Qualcomm® Technologies, Inc., Texas Instruments, Inc.® Open Multimedia Applications Platform (OMAP)™ processor(s); a MIPS-based design from MIPS Technologies, Inc. such as MIPS Warrior M-class, Warrior I-class, and Warrior P-class processors; an ARM-based design licensed from ARM Holdings, Ltd., such as the ARM Cortex-A, Cortex-R, and Cortex-M family of processors; the ThunderX2® provided by Cavium™, Inc.; or the like. In some implementations, the processor(s) 952 may be a part of a SoC, SiP, a multi-chip package (MCP), and/or the like, in which the processor(s) 952 and other components are formed into a single integrated circuit, or a single package, such as the Edison™ or Galileo™ SoC boards from Intel® Corporation. Other examples of the processor(s) 952 are mentioned elsewhere in the present disclosure.

The node 950 may include or be coupled to acceleration circuitry 964, which may be embodied by one or more AI/ML accelerators, a neural compute stick, neuromorphic hardware, an FPGA, an arrangement of GPUs, one or more SoCs (including programmable SoCs), one or more CPUs, one or more digital signal processors, dedicated ASICs (including programmable ASICs), PLDs such as complex (CPLDs) or high complexity PLDs (HCPLDs), and/or other forms of specialized processors or circuitry designed to accomplish one or more specialized tasks. These tasks may include AI/ML processing (e.g., including training, inferencing, and classification operations), visual data processing, network data processing, object detection, rule analysis, or the like. In FPGA-based implementations, the acceleration circuitry 964 may comprise logic blocks or logic fabric and other interconnected resources that may be programmed (configured) to perform various functions, such as the procedures, methods, functions, etc. of the various embodiments discussed herein. In such implementations, the acceleration circuitry 964 may also include memory cells (e.g., EPROM, EEPROM, flash memory, static memory (e.g., SRAM, anti-fuses, etc.) used to store logic blocks, logic fabric, data, etc. in LUTs and the like.

In some implementations, the processor circuitry 952 and/or acceleration circuitry 964 may include hardware elements specifically tailored for ML functionality, such as for operating performing ANN operations such as those discussed herein. In these implementations, the processor circuitry 952 and/or acceleration circuitry 964 may be, or may include, an AI engine chip that can run many different kinds of AI instruction sets once loaded with the appropriate weightings and training code. Additionally or alternatively, the processor circuitry 952 and/or acceleration circuitry 964 may be, or may include, AI accelerator(s), which may be one or more of the aforementioned hardware accelerators designed for hardware acceleration of AI applications. As examples, these processor(s) or accelerators may be a cluster of AI GPUs, TPUs developed by Google® Inc., Real AI Processors (RAPs™) provided by AlphaICs®, Nervana™ Neural Network Processors (NNPs) provided by Intel® Corp., Intel® Movidius™ Myriad™ X VPU, NVIDIA® PX™ based GPUs, the NM500 chip provided by General Vision®, Hardware 3 provided by Tesla®, Inc., an Epiphany™ based processor provided by Adapteva®, or the like. In some embodiments, the processor circuitry 952 and/or acceleration circuitry 964 and/or hardware accelerator circuitry may be implemented as AI accelerating coprocessor(s), such as the Hexagon 685 DSP provided by Qualcomm®, the PowerVR 2NX Neural Net Accelerator (NNA) provided by Imagination Technologies Limited®, the Neural Engine core within the Apple® A11 or A12 Bionic SoC, the Neural Processing Unit (NPU) within the HiSilicon Kirin 970 provided by Huawei®, and/or the like. In some hardware-based implementations, individual subsystems of node 950 may be operated by the respective AI accelerating co-processor(s), AI GPUs, TPUs, or hardware accelerators (e.g., FPGAs, ASICs, DSPs, SoCs, etc.), etc., that are configured with appropriate logic blocks, bit stream(s), etc. to perform their respective functions.

The node 950 also includes system memory 954. Any number of memory devices may be used to provide for a given amount of system memory. As examples, the memory 954 may be, or include, volatile memory such as random access memory (RAM), static RAM (SRAM), dynamic RAM (DRAM), synchronous DRAM (SDRAM), RAMBUS® Dynamic Random Access Memory (RDRAM®), and/or any other desired type of volatile memory device. Additionally or alternatively, the memory 954 may be, or include, non-volatile memory such as read-only memory (ROM), erasable programmable ROM (EPROM), electrically erasable programmable (EEPROM), flash memory, non-volatile RAM, ferroelectric RAM, phase change memory (PCM), flash memory, and/or any other desired type of non-volatile memory device. Access to the memory 954 is controlled by a memory controller. The individual memory devices may be of any number of different package types such as single die package (SDP), dual die package (DDP) or quad die package (Q17P). Any number of other memory implementations may be used, such as dual inline memory modules (DIMMs) of different varieties including but not limited to microDIMMs or MiniDIMMs.

Storage circuitry 958 provides persistent storage of information such as data, applications, operating systems and so forth. In an example, the storage 958 may be implemented via a solid-state disk drive (SSDD) and/or high-speed electrically erasable memory (commonly referred to as "flash memory"). Other devices that may be used for the storage 958 include flash memory cards, such as SD cards, microSD cards, XD picture cards, and the like, and Universal Serial Bus (USB) flash drives. In an example, the memory device may be or may include memory devices that use chalcogenide glass, multi-threshold level NAND flash memory, NOR flash memory, single or multi-level PCM, a resistive memory, nanowire memory, ferroelectric transistor random access memory (FeTRAM), anti-ferroelectric memory, magnetoresistive random access memory (MRAM) memory that incorporates memristor technology, phase change RAM (PRAM), resistive memory including the metal oxide base, the oxygen vacancy base and the conductive bridge RAM (CB-RAM), or spin transfer torque (STT)-MRAM, a spintronic magnetic junction memory based device, a magnetic tunneling junction (MTJ) based device, a Domain Wall (DW) and Spin Orbit Transfer (SOT) based device, a thyristor based memory device, a hard disk drive (HDD), micro HDD, of a combination thereof, and/or any other memory. The memory circuitry 954 and/or storage circuitry 958 may also incorporate three-dimensional (3D) cross-point (XPOINT) memories from Intel® and Micron®.

The memory circuitry 954 and/or storage circuitry 958 is/are configured to store computational logic 983 in the form of software, firmware, microcode, or hardware-level instructions to implement the techniques described herein. The computational logic 983 may be employed to store working copies and/or permanent copies of programming instructions, or data to create the programming instructions, for the operation of various components of system 900 (e.g., drivers, libraries, application programming interfaces (APIs), etc.), an operating system of system 900, one or more applications, and/or for carrying out the embodiments discussed herein. The computational logic 983 may be stored or loaded into memory circuitry 954 as instructions 982, or data to create the instructions 982, which are then accessed for execution by the processor circuitry 952 to carry out the functions described herein. The processor circuitry 952 and/or the acceleration circuitry 964 accesses the memory circuitry 954 and/or the storage circuitry 958 over the IX 956. The instructions 982 direct the processor circuitry 952 to perform a specific sequence or flow of actions, for example, as described with respect to flowchart(s) and block diagram(s) of operations and functionality depicted previously. The various elements may be implemented by assembler instructions supported by processor circuitry 952 or high-level languages that may be compiled into instructions 981, or data to create the instructions 981, to be executed by the processor circuitry 952. The permanent copy of the programming instructions may be placed into persistent storage devices of storage circuitry 958 in the factory or in the field through, for example, a distribution medium (not shown), through a communication interface (e.g., from a distribution server (not shown)), over-the-air (OTA), or any combination thereof.

The IX 956 couples the processor 952 to communication circuitry 966 for communications with other devices, such as a remote server (not shown) and the like. The communication circuitry 966 is a hardware element, or collection of hardware elements, used to communicate over one or more networks 963 and/or with other devices. In one example, communication circuitry 966 is, or includes, transceiver circuitry configured to enable wireless communications using any number of frequencies and protocols such as, for example, the Institute of Electrical and Electronics Engineers (IEEE) 802.11 (and/or variants thereof), IEEE 802.15.4, Bluetooth® and/or Bluetooth® low energy (BLE), ZigBee®, LoRaWAN™ (Long Range Wide Area Network), a cellular protocol such as 3GPP LTE and/or Fifth Generation (5G)/New Radio (NR), and/or the like. Additionally or alternatively, communication circuitry 966 is, or includes, one or more network interface controllers (NICs) to enable wired communication using, for example, an Ethernet connection, Controller Area Network (CAN), Local Interconnect Network (LIN), DeviceNet, ControlNet, Data Highway+, or PROFINET, among many others. In some embodiments, the communication circuitry 966 may include or otherwise be coupled with the an accelerator 924 including one or more synaptic devices/structures 925, etc., as described previously.

The IX 956 also couples the processor 952 to interface circuitry 970 that is used to connect node 950 with one or more external devices 972. The external devices 972 may include, for example, sensors, actuators, positioning circuitry (e.g., global navigation satellite system (GNSS)/Global Positioning System (GPS) circuitry), client devices, servers, network appliances (e.g., switches, hubs, routers, etc.), integrated photonics devices (e.g., optical NNs (ONN) integrated circuit (IC) and/or the like), and/or other like devices.

In some optional examples, various input/output (I/O) devices may be present within or connected to, the node 950, which are referred to as input circuitry 986 and output circuitry 984 in Figure 9. The input circuitry 986 and output circuitry 984 include one or more user interfaces designed to enable user interaction with the platform 950 and/or peripheral component interfaces designed to enable peripheral component interaction with the platform 950. Input circuitry 986 may include any physical or virtual means for accepting an input including, inter alia, one or more physical or virtual buttons (e.g., a reset button), a physical keyboard, keypad, mouse, touchpad, touchscreen, microphones, scanner, headset, and/or the like. The output circuitry 984 may be included to show information or otherwise convey information, such as sensor readings, actuator position(s), or other like information. Data and/or graphics may be displayed on one or more user interface components of the output circuitry 984. Output circuitry 984 may include any number and/or combinations of audio or visual display, including, inter alia, one or more simple visual outputs/indicators (e.g., binary status indicators (e.g., light emitting diodes (LEDs)) and multi-character visual outputs, or more complex outputs such as display devices or touchscreens (e.g., Liquid Chrystal Displays (LCD), LED displays, quantum dot displays, projectors, etc.), with the output of characters, graphics, multimedia objects, and the like being generated or produced from the operation of the platform 950. The output circuitry 984 may also include speakers and/or other audio emitting devices, printer(s), and/or the like. Additionally or alternatively, sensor(s) may be used as the input circuitry 984 (e.g., an image capture device, motion capture device, or the like) and one or more actuators may be used as the output device circuitry 984 (e.g., an actuator to provide haptic feedback or the like). Peripheral component interfaces may include, but are not limited to, a non-volatile memory port, a USB port, an audio jack, a power supply interface, etc. A display or console hardware, in the context of the present system, may be used to provide output and receive input of an edge computing system; to manage components or services of an edge computing system; identify a state of an edge computing component or service; or to conduct any other number of management or administration functions or service use cases.

The components of the node 950 may communicate over the interconnect (IX) 956. The IX 956 may include any number of technologies, including Industry Standard Architecture (ISA) and/or extended ISA (EISA), FASTBUS, Low Pin Count (LPC) bus, Inter-IC (I2C), SPI, power management bus (PMBus), peripheral component IX (PCI), PCI express (PCIe), PCI extended (PCIx), Intel® QuickPath IX (QPI), Intel® Ultra Path IX (UPI), Intel® Accelerator Link, Compute Express Link (CXL), Coherent Accelerator Processor Interface (CAPI) and/or OpenCAPI, Intel® Omni-Path Architecture (OPA), RapidIO™, cache coherent interconnect for accelerators (CCIX), Gen-Z Consortium, HyperTransport and/or Lightning Data Transport (LDT), NVLink provided by NVIDIA®, InfiniBand (IB), Time-Trigger Protocol (TTP), FlexRay, PROFIBUS, Ethernet, USB, point-to-point interfaces, and/or any number of other IX technologies. The IX 956 may be a proprietary bus, for example, used in a SoC based system.

The number, capability, and/or capacity of the elements of system 900 may vary, depending on whether computing system 900 is used as a stationary computing device (e.g., a server computer in a data center, a workstation, a desktop computer, etc.) or a mobile computing device (e.g., a smartphone, tablet computing device, laptop computer, game console, IoT device, etc.). In various implementations, the computing device system 900 may comprise one or more components of a data center, a desktop computer, a workstation, a laptop, a smartphone, a tablet, a digital camera, a smart appliance, a smart home hub, a network appliance, and/or any other device/system that processes data.

Some non-limiting examples of various embodiments are provided below.

Example 1 includes an apparatus comprising: a worker; and one or more non-transitory computer-readable media comprising instructions that, upon execution of the instructions by the worker, are to cause the worker to: identify, based on data related to a first node of the NN, a first output and a first error related to a second node, wherein the first node is processed by a second worker; facilitate, based on the first output and the first error, alteration of the data related to the first node; and delete, by the first worker subsequent to the facilitation of the alteration of the data related to the first node, the data related to the first node.

Example 2 includes the apparatus of example 1, or some other example herein, wherein the data related to the first node includes an input value and a weight value of the first node.

Example 3 includes the apparatus of example 2, or some other example herein, wherein the input value and the weight value are provided by the second worker to the first worker.

Example 4 includes the apparatus of example 2, or some other example herein, wherein the input value is provided by the second worker to the first worker, and the weight value is retrieved from a memory communicatively coupled with the first worker.

Example 5 includes the apparatus of example 2, or some other example herein, wherein the instructions to facilitate alteration of the data related to the first node include instructions to provide, by the first worker, an indication that the second worker is to alter the input value.

Example 6 includes the apparatus of example 2, or some other example herein, wherein the instructions to facilitate alteration of the data related to the first node include instructions to provide, by the first worker, an indication that the second worker is to alter the weight value.

Example 7 includes the apparatus of example 2, or some other example herein, wherein the instructions to facilitate alteration of the data related to the first node include instructions to alter, by the first worker, the weight value.

Example 8 includes the apparatus of example 1, or some other example herein, wherein the instructions are further to: perform, by the first worker, a forward training pass related to the first node and the second node, wherein the forward training pass includes construction of a CG; and delete, by the first worker, the CG prior to identifying the first output.

Example 9 includes the apparatus of example 1, or some other example herein, wherein the instructions are further to execute a backward pass without a complete CG.

Example 10 includes the apparatus of example 1, or some other example herein, wherein the first worker is a processor or a core of a multi-core processor.

Example 11 includes the apparatus of example 1, or some other example herein, wherein the instructions are further to generate the second output subsequent to deletion of the data related to the first node.

Example 12 includes the apparatus of example 1, or some other example herein, wherein the second node is a node of a graph NN (GNN).

Example 13 includes a method of operating a first worker of a distributed NN training system to train an NN, the method comprising: identifying, by the first worker based on data related to a first node of the NN, a first output related to a second node and a first error related to the first output, wherein the first node is processed by a second worker in the distributed NN training system; facilitating, by the first worker based on the first output and the first error, alteration of the data related to the first node; deleting, by the first worker subsequent to the facilitating the alteration of the data related to the first node, the data related to the first node; identifying, by the first worker based on data related to a third node of the NN, a second output and a second error related to the second node, wherein the third node is processed by a third worker; and facilitating, by the first worker based on the second output and the second error, alteration of the data related to the third node.

Example 14 includes the method of example 13, or some other example herein, wherein the data related to the first node includes an input value and a weight value of the first node.

Example 15 includes the method of example 14, or some other example herein, wherein the input value and the weight value are provided by the second worker to the first worker.

Example 16 includes the method of example 14, or some other example herein, wherein the input value is provided by the second worker to the first worker, and the weight value is retrieved from a memory communicatively coupled with the first worker.

Example 17 includes the method of example 14, or some other example herein, wherein facilitating alteration of the data related to the first node includes providing, by the first worker, an indication that the second worker is to alter the input value.

Example 18 includes the method of example 14, or some other example herein, wherein facilitating alteration of the data related to the first node includes providing, by the first worker, an indication that the second worker is to alter the weight value.

Example 19 includes the method of example 14, or some other example herein, wherein facilitating alteration of the data related to the first node include altering, by the first worker, the weight value.

Example 20 includes the method of example 13, or some other example herein, further comprising: performing, by the first worker, a forward training pass related to the first node and the second node, wherein the forward training pass includes construction of a CG; and deleting, by the first worker, the CG prior to identifying the first output.

Example 21 includes the method of example 13, or some other example herein, further comprising: executing a backward pass without a complete CG.

Example 22 includes the method of example 13, or some other example herein, wherein the first worker is a processor or a core of a multi-core processor.

Example 23 includes the method of example 13, or some other example herein, wherein the method comprises generating the second output subsequent to deletion of the data related to the first node.

Example 24 includes the method of example 13, or some other example herein, wherein the second node is a node of a graph NN (GNN).

Example 25 includes an apparatus to be employed in a distributed neural network (NN), wherein the apparatus comprises: a first worker to: execute a forward training pass of a first node of a distributed NN, wherein execution of the forward training pass includes generation of a first computational graph (CG) that is based on inputs related to a second node that is processed by a second worker of the distributed NN; delete, subsequent to the forward training pass of the first node, the CG; and execute, a backward pass of the first node, wherein execution of the backward pass includes re-generation of at least a portion of the first CG; and a second worker communicatively coupled with the first worker, wherein the second worker is to provide at least one input of the inputs related to the second node.

Example 26 includes the apparatus of example 25, or some other example herein, wherein the first worker is further to: identify, based on the backward pass, an alteration to an input of the inputs related to the second node of the distributed NN; and facilitate the alteration.

Example 27 includes the apparatus of example 25, or some other example herein, wherein the inputs related to the second node include an input value and a weight value of the second node.

Example 28 includes the apparatus of example 27, or some other example herein, wherein the input value and the weight value are provided by the second worker to the first worker.

Example 29 includes the apparatus of example 27, or some other example herein, wherein the input value is provided by the second worker to the first worker, and the weight value is retrieved from a memory communicatively coupled with the first worker.

Example 30 includes the apparatus of example 27, or some other example herein, wherein facilitating alteration of the inputs related to the second node includes providing, by the first worker, an indication that the second worker is to alter the input value.

Example 31 includes the apparatus of example 27, or some other example herein, wherein facilitating alteration of the data related to the second node includes providing, by the first worker, an indication that the second worker is to alter the weight value.

Example 32 includes the apparatus of example 25, or some other example herein, wherein the apparatus include a multi-core processor, and wherein the first worker is a first core of the multi-core processor and the second worker is a second core of the multi-core processor.

Example 33 includes the apparatus of example 25, or some other example herein, wherein the first worker is a first processor of an electronic device, and the second worker is a second processor of the electronic device.

Example 34 includes the apparatus of example 25, or some other example herein, wherein the NN is a graph NN (GNN).

Example 35 includes one or more non-transitory computer-readable media comprising instructions that, upon execution of the instructions by a first worker of a distributed neural network (NN) training system, are to cause the first worker to: execute a forward training pass of a first node of a distributed NN, wherein execution of the forward training pass includes generation of a first computational graph (CG) that is based on inputs related to a second node that is processed by a second worker of the distributed NN; delete, subsequent to the forward training pass of the first node, the CG; and execute, a backward pass of the first node, wherein execution of the backward pass includes re-generation of at least a portion of the first CG.

Example 36 includes the one or more non-transitory computer-readable media of example 35, or some other example herein, wherein the instructions are further to: identify, by the first worker, based on the backward pass, an alteration to an input of the inputs related to the second node of the distributed NN; and facilitate, by the first worker, the alteration.

Example 37 includes the one or more non-transitory computer-readable media of example 35, or some other example herein, wherein the inputs related to the second node include an input value and a weight value of the second node.

Example 38 includes the one or more non-transitory computer-readable media of example 37, or some other example herein, wherein the input value and the weight value are provided by the second worker to the first worker.

Example 39 includes the one or more non-transitory computer-readable media of example 37, or some other example herein, wherein the input value is provided by the second worker to the first worker, and the weight value is retrieved from a memory communicatively coupled with the first worker.

Example 40 includes the one or more non-transitory computer-readable media of example 37, or some other example herein, wherein facilitating alteration of the inputs related to the second node includes providing, by the first worker, an indication that the second worker is to alter the input value.

Example 41 includes the one or more non-transitory computer-readable media of example 37, or some other example herein, wherein facilitating alteration of the data related to the second node includes providing, by the first worker, an indication that the second worker is to alter the weight value.

Example 42 includes a method comprising: executing, by a first worker of a distributed neural network (NN), a forward training pass of a first node of the distributed NN, wherein execution of the forward training pass includes generation of a first computational graph (CG) that is based on inputs related to a second node that is processed by a second worker of the distributed NN; deleting, by the first worker subsequent to the forward training pass of the first node, the CG; and executing, by the first worker, a backward pass of the first node, wherein execution of the backward pass includes re-generation of at least a portion of the first CG.

Example 43 includes the method of example 42, or some other example herein, further comprising: identifying, by the first worker, based on the backward pass, an alteration to an input of the inputs related to the second node of the distributed NN; and facilitating, by the first worker, the alteration.

Example 44 includes the method of example 42, or some other example herein, wherein the inputs related to the second node include an input value and a weight value of the second node.

Example 45 includes the method of example 44, or some other example herein, wherein the input value and the weight value are provided by the second worker to the first worker.

Example 46 includes the method of example 44, or some other example herein, wherein the input value is provided by the second worker to the first worker, and the weight value is retrieved from a memory communicatively coupled with the first worker.

Example 47 includes the method of example 44, or some other example herein, wherein facilitating alteration of the inputs related to the second node includes providing, by the first worker, an indication that the second worker is to alter the input value.

Example 48 includes the method of example 44, or some other example herein, wherein facilitating alteration of the data related to the second node includes providing, by the first worker, an indication that the second worker is to alter the weight value.

Example 49 includes an apparatus to perform the method, technique, or process of one or more of example 1-48, or some other method, technique, or process described herein.

Example 50 includes a method related to the method, technique, or process of one or more of examples 1-48, or some other method, technique, or process described herein.

Example 51 includes an apparatus comprising means to perform the method, technique, or process of one or more of examples 1-48, or some other method, technique, or process described herein.

Example 52 includes one or more non-transitory computer-readable media comprising instructions that, upon execution of the instructions by one or more processors or processor cores of an electronic device, are to cause the electronic device to perform the method, technique, or process of one or more of examples 1-48, or some other method, technique, or process described herein.

Although certain embodiments have been illustrated and described herein for purposes of description, this application is intended to cover any adaptations or variations of the embodiments discussed herein. Therefore, it is manifestly intended that embodiments described herein be limited only by the claims.

Where the disclosure recites "a" or "a first" element or the equivalent thereof, such disclosure includes one or more such elements, neither requiring nor excluding two or more such elements. Further, ordinal indicators (e.g., first, second, or third) for identified elements are used to distinguish between the elements, and do not indicate or imply a required or limited number of such elements, nor do they indicate a particular position or order of such elements unless otherwise specifically stated.

**Claims**

1. An apparatus to be employed in a distributed neural network (NN), wherein the apparatus comprises:

a first worker to:

execute a forward training pass of a first node of a distributed NN, wherein execution of the forward training pass includes generation of a first computational graph (CG) that is based on inputs related to a second node that is processed by a second worker of the distributed NN;
delete, subsequent to the forward training pass of the first node, the CG; and
execute, a backward pass of the first node, wherein execution of the backward pass includes re-generation of at least a portion of the first CG; and

a second worker communicatively coupled with the first worker, wherein the second worker is to provide at least one input of the inputs related to the second node.

2. The apparatus of claim 1, wherein the first worker is further to:

identify, based on the backward pass, an alteration to an input of the inputs related to the second node of the distributed NN; and
facilitate the alteration.

3. The apparatus of any one of claims 1 or 2, wherein the inputs related to the second node include an input value and a weight value of the second node.

4. The apparatus of claim 3, wherein the input value and the weight value are provided by the second worker to the first worker; or

optionally, wherein the input value is provided by the second worker to the first worker, and the weight value is retrieved from a memory communicatively coupled with the first worker; or
optionally, wherein facilitating alteration of the inputs related to the second node includes providing, by the first worker, an indication that the second worker is to alter the input value; or
optionally, wherein facilitating alteration of the data related to the second node includes providing, by the first worker, an indication that the second worker is to alter the weight value.

5. The apparatus of any one of claims 1 or 2, wherein the apparatus includes a multi-core processor, and wherein the first worker is a first core of the multi-core processor and the second worker is a second core of the multi-core processor.

6. The apparatus of any one of claims 1 or 2, wherein the first worker is a first processor of an electronic device, and the second worker is a second processor of the electronic device.

7. One or more non-transitory computer-readable media comprising instructions that, upon execution of the instructions by a first worker of a distributed neural network (NN) training system, are to cause the first worker to:

execute a forward training pass of a first node of a distributed NN, wherein execution of the forward training pass includes generation of a first computational graph (CG) that is based on inputs related to a second node that is processed by a second worker of the distributed NN;
delete, subsequent to the forward training pass of the first node, the CG; and
execute, a backward pass of the first node, wherein execution of the backward pass includes re-generation of at least a portion of the first CG.

8. The one or more non-transitory computer-readable media of claim 7, wherein the instructions are further to:

identify, by the first worker, based on the backward pass, an alteration to an input of the inputs related to the second node of the distributed NN; and
facilitate, by the first worker, the alteration.

9. The one or more non-transitory computer-readable media of any one of claims 7 or 8, wherein the inputs related to the second node include an input value and a weight value of the second node.

10. The one or more non-transitory computer-readable media of claim 9, wherein the input value and the weight value are provided by the second worker to the first worker; or

optionally, wherein the input value is provided by the second worker to the first worker, and the weight value is retrieved from a memory communicatively coupled with the first worker; or

optionally, wherein facilitating alteration of the inputs related to the second node includes providing, by the first worker, an indication that the second worker is to alter the input value; or

optionally, wherein facilitating alteration of the data related to the second node includes providing, by the first worker, an indication that the second worker is to alter the weight value.

11. A method comprising:

executing, by a first worker of a distributed neural network (NN), a forward training pass of a first node of the distributed NN, wherein execution of the forward training pass includes generation of a first computational graph (CG) that is based on inputs related to a second node that is processed by a second worker of the distributed NN; deleting, by the first worker subsequent to the forward training pass of the first node, the CG; and

executing, by the first worker, a backward pass of the first node, wherein execution of the backward pass includes re-generation of at least a portion of the first CG.

12. The method of claim 11, further comprising:

identifying, by the first worker, based on the backward pass, an alteration to an input of the inputs related to the second node of the distributed NN; and

facilitating, by the first worker, the alteration.

13. The method of any one of claims 11 or 12, wherein the inputs related to the second node include an input value and a weight value of the second node.

14. The method of claim 13, wherein the input value and the weight value are provided by the second worker to the first worker; or

optionally, wherein the input value is provided by the second worker to the first worker, and the weight value is retrieved from a memory communicatively coupled with the first worker.

15. The method of claim 14, wherein facilitating alteration of the inputs related to the second node includes providing, by the first worker, an indication that the second worker is to alter the input value; or

optionally, wherein facilitating alteration of the data related to the second node includes providing, by the first worker, an indication that the second worker is to alter the weight value.

Figure 1

Figure 2a

Figure 2b

EP 4 174 725 A1

Figure 3

$e'_3, y'_3$

$*$

$x_3$     $w_3$   $x_4$     $w_4$

← 405

420

$e''_3, y''_3$

← 410

$x_1$     $w_1$   $x_2$     $w_2$

425

$e'''_3, y'''_3$

415 →

$x_5$     $w_5$   $x_6$     $w_6$

# Figure 4

430

500

Start computation
at machine i

Enable construction
of computational graphs

Disable construction
of computational graphs

$$e(Y_i) = \frac{dLoss(Y_i)}{dY_i}$$
$$j = 1$$

Initialize $Y_i$
$j = 1$

if j <= N — no → End

if j <= N — no

yes

$X_{jlocal} \leftarrow$ Fetch $X_j$

yes

$X_{jlocal} \leftarrow$ Fetch $X_j$

$Y_i \leftarrow Aggregation(Y_i, f(X_{jlocal}; W_{ji}))$

$Z \leftarrow stopgrad(Deaggregation(Y_i, f(X_{jlocal}; W_{ji})))$
$Y_{temp} \leftarrow aggregation(Z, f(X_{jlocal}; W_{ji}))$

Delete $X_{jlocal}$

$$e(X_j) = e(Y_i)\frac{dY_{temp}}{dX_{jlocal}} \quad e(W_{ji}) = e(Y_i)\frac{dY_{temp}}{dW_{ji}}$$
$$W_{ij} \leftarrow W_{ji} - \eta e(W_{ji})$$

$j \leftarrow j + 1$

Send $e(X_j)$ to worker j

505

Delete $X_{jlocal}, Z, Y_{temp}, e(X_j), e(W_{ji})$

# Figure 5

$j \leftarrow j + 1$

510

600

Executing, by a first worker of a distributed neural network (NN), a forward training pass of a first node of the distributed NN, wherein execution of the forward training pass includes generation of a first computational graph (CG) that is based on inputs related to a second node that is processed by a second worker of the distributed NN

**605**

Deleting, by the first worker subsequent to the forward training pass of the first node, the CG

**610**

Executing, by the first worker, a backward pass of the first node, wherein execution of the backward pass includes re-generation of at least a portion of the first CG

**615**

# Figure 6

Identifying, by the a first worker of a distributed neural network (NN) training system based on data related to a first node of the NN, a first output related to a second node and a first error related to the first output, wherein the first node is processed by a second worker in the distributed NN training system
**705**

Facilitating, by the first worker based on the first output and the first error, alteration of the data related to the first node
**710**

Deleting, by the first worker subsequent to the facilitating the alteration of the data related to the first node, the data related to the first node
**715**

Identifying, by the first worker based on data related to a third node of the NN, a second output and a second error related to the second node, wherein the third node is processed by a third worker
**720**

Facilitating, by the first worker based on the second output and the second error, alteration of the data related to the third node
**725**

# Figure 7 ⌐ 700

Figure 8

EP 4 174 725 A1

900

Inference Engine 916

Accelerator(s) 924

synaptic structure(s) 925

Model 920

Hardware Unit(s) 922

—914→ Application Logic 912
←918—

# Figure 9a

**Computing System 950**

Processor Circuitry 952

Instructions 981

Acceleration circuitry 964

Comm. Circuitry 966

Network 963

Memory Circuitry 954

Instructions 982

Input circuitry 986

Interface Circuitry 970

External Devices 972

Storage Circuitry 958

Logic 983

Output Ciruitry 984

956

# Figure 9b

Europäisches Patentamt

European Patent Office

Office européen des brevets

**EUROPEAN SEARCH REPORT**

Application Number

EP 22 18 4891

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/042620 A1 (CHEN ZHIFENG [US] ET AL) 11 February 2021 (2021-02-11)<br>* figures 1-2 *<br>* paragraph [0002] *<br>* paragraph [0012] – paragraph [0013] *<br>* paragraph [0024] – paragraph [0025] *<br>* paragraph [0047] *<br>* paragraph [0062] *<br>* paragraph [0067] *<br>* paragraph [0070] – paragraph [0074] *<br>* paragraph [0076] *<br>_____ | 1-15 | INV.<br>G06N3/08<br>G06N3/063<br>G06F9/50<br><br>ADD.<br>G06N3/04 |

**TECHNICAL FIELDS SEARCHED (IPC)**

G06F
G06N

The present search report has been drawn up for all claims

| Place of search | Date of completion of the search | Examiner |
|---|---|---|
| Munich | 23 November 2022 | Maghroum, Walid |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 18 4891

This annex lists the patent family members relating to the patent documents cited in the above-mentioned European search report.
The members are as contained in the European Patent Office EDP file on
The European Patent Office is in no way liable for these particulars which are merely given for the purpose of information.

23-11-2022

| Patent document cited in search report | Publication date | Patent family member(s) | Publication date |
|---|---|---|---|
| US 2021042620 A1 | 11-02-2021 | US 2021042620 A1 | 11-02-2021 |
| | | US 2022121945 A1 | 21-04-2022 |

EPO FORM P0459

For more details about this annex : see Official Journal of the European Patent Office, No. 12/82